# EUROPEAN PATENT APPLICATION

(11) **EP 3 252 297 A1**
(43) Date of publication of application: **06.12.2017**
(21) Application number: 15880209.0
(22) Date of filing: 30.01.2015
(51) Int. Cl.: F02M 21/02, B63H 21/14

(54) **FUEL SUPPLY SYSTEM AND METHOD FOR SHIP ENGINE**

(71) Applicant: Daewoo Shipbuilding & Marine Engineering Co., Ltd., Seoul 100-180 (KR)
(72) Inventor: LEE, Chang Woo, Seoul 01460 (KR); KIM, Dong Chan, Gyeonggi-do 10556 (KR); MOON, Young Sik, Gwangmyeong-si Gyeonggi-do 423-733 (KR); KIM, Nam Soo, Suwon-si Gyeonggi-do 440-710 (KR)
(74) Representative: Intès, Didier Gérard André
(86) International application number: PCT/KR2015/001032
(87) International publication number: WO 2016/122028

(57) **Abstract**

Disclosed are a fuel supply system and method for a ship engine. The fuel supply system for a ship engine of the present invention comprises: a first flow channel which is connected to an LNG storage tank of a ship, pumps and vaporizes liquid natural gas stored in the LNG storage tank, and supplies the same to a first engine provided to the ship; a pressure reducing flow channel which branches out from the first flow channel, reduces the pressure of the pumped and vaporized natural gas, and supplies the same to a second engine provided to the ship; and a pressure maintaining flow channel which branches out from the pressure reducing flow channel and supplies the pressure reduced natural gas to the LNG storage tank.

## Description

### [Technical Field]

The present invention relates to a fuel supply system and method for a ship engine, and, more particularly, to a fuel supply system and method for a ship engine which includes: a first channel for pumping LNG from an LNG storage tank, re-gasifying the LNG, and supplying the LNG to a first engine of a ship; a decompression channel branching off from the first channel to decompress the pumped and re-gasified LNG and supply the decompressed LNG to a second engine of the ship; and a pressure containing channel branching off from the decompression channel to supply the decompressed LNG to the LNG storage tank.

### [Background Art]

Recently, consumption of liquefied gas such as liquefied natural gas (LNG) and liquefied petroleum gas (LPG) has been rapidly increasing worldwide.

In particular, liquefied natural gas (hereinafter, "LNG") is an eco-friendly fuel with low emission of air pollutants during combustion and is increasingly used in various fields.

LNG is a colorless transparent liquid which can be obtained by cooling natural gas containing methane as a main component to about -162°C and has a volume of about 1/600 that of natural gas. Thus, liquefaction of natural gas into LNG enables very efficient transportation of natural gas. For example, LNG carriers are used to transport (carry) LNG by sea.

As international and domestic regulation standards for ships become increasingly strict, there is growing interest in eco-friendly high-efficiency fuels for ships. Particularly, a dual fuel diesel electric engine (DFDE) that can be fueled by a gas generated by natural or forced evaporation of LNG was developed and put into use.

Such a ship fueled by LNG is referred to as an LNG fueled ship (LFS). With tightened international emission standards for ships and stabilization of LNG prices, consumption of LNG as a ship fuel is expected to increase.

### [Disclosure]

### [Technical Problem]

A ship using LNG as fuel may include a plurality of engines and LNG may be supplied under various conditions depending on the type of engine.

It is an aspect of the present invention to provide a fuel supply system and method which can ensure smooth fuel supply in a ship including both an engine fueled by a high-pressure gas and an engine fueled by a gas at a lower pressure.

### [Technical Solution]

In accordance with one aspect of the present invention, a fuel supply system for a ship engine includes: a first channel connected to an LNG storage tank of a ship to pump LNG from the LNG storage tank, re-gasify the LNG, and supply the LNG to a first engine of the ship;
a decompression channel branching off from the first channel to decompress the pumped and re-gasified LNG and supply the LNG to a second engine of the ship; and
a pressure containing channel branching off from the decompression channel to supply the decompressed LNG to the LNG storage tank.

Preferably, the decompressed LNG is supplied through the pressure containing channel to a lower portion of the LNG storage tank to prevent a pressure drop in the LNG storage tank.

Preferably, the fuel supply system further includes: a second channel supplying boil-off gas (BOG) generated in the LNG storage tank to the second engine; and a heater disposed in the second channel and heating the BOG to be supplied to the second engine.

Preferably, the fuel supply system further includes: a high pressure pump disposed in the first channel to pressurize LNG to a high pressure; and a vaporizer re-gasifying the LNG pressurized by the high pressure pump and supplying the LNG to the first engine, wherein the decompression channel branches off from the first channel downstream of the high pressure pump.

Preferably, the first engine is a high-pressure gas injection engine fueled by a high-pressure gas compressed to a pressure of 150 bar to 400 bar, and the second engine is a DF engine fueled by a low-pressure gas at 5 bar to 20 bar.

Preferably, the fuel supply system further includes: a delivery pump disposed in the LNG storage tank to supply LNG to the first channel; and a decompression valve disposed in the decompression channel upstream of a point at which the pressure containing channel branches off from the decompression channel.

Preferably, the fuel supply system further includes: a shut-off valve disposed in the decompression channel downstream of the point at which the pressure containing channel branches off from the decompression channel; a return valve disposed in the pressure containing channel; and a fuel supply valve disposed in the second channel.

Preferably, the LNG storage tank is a pressure-resistant tank and has a design pressure set to retain BOG or flash gas generated in the pressure-resistant tank during operation of the ship.

In accordance with another aspect of the present invention, there is provided a fuel supply method for a ship engine, in which LNG is pumped from an LNG storage tank of a ship and re-gasified to be supplied to a first engine of the ship, and boil-off gas (BOG) generated in the LNG storage tank is supplied to a second engine of the ship,

wherein a fraction of the pumped and re-gasified LNG to be supplied to the first engine is decompressed and supplied to the second engine, and a fraction of the decompressed LNG is supplied to the LNG storage tank to prevent pressure drop in the LNG storage tank.

Preferably, the first engine is a high-pressure gas injection engine fueled by a high-pressure gas compressed to a high pressure of 150 bar to 400 bar, and the second engine is a DF engine fueled by a low-pressure gas at 5 bar to 20 bar.

### [Advantageous Effects]

The present invention provides a fuel supply system which includes: a first channel for pumping LNG from an LNG storage tank, re-gasifying the LNG, and supply the LNG to a first engine of the ship; a decompression channel branching off from the first channel to decompress the pumped and re-gasified LNG and supply the LNG to a second engine of the ship; and a pressure containing channel branching off from the decompression channel to supply the decompressed LNG to the LNG storage tank to prevent pressure drop in the LNG storage tank.

Since pressure drop of the LNG storage tank T due to fuel supply is prevented, supply of BOG to the second engine can be stably and smoothly achieved, and calorific value of fuel to be supplied to the engines can be regulated.

In addition, there is no need to provide a separate vaporizer, heater, or pipe for preventing pressure drop in the LNG storage tank T while eliminating a need to provide a component for regulating the methane number of LNG, whereby the system can have a compact structure, thereby improving space utilization in the ship.

### [Description of Drawings]

Fig. 1 is a diagram illustrating a basic concept of a system for supplying fuel from an LNG storage tank to a plurality of engines according to one embodiment of the present invention, and Fig. 2 is a diagram illustrating an improvement of the system of Fig. 1, which is provided with a pressure containing channel.
Fig. 3 is a diagram illustrating a modification of the system of Fig. 2.

### [Best Mode]

The above and other aspects, features, and advantages of the present invention will become apparent from the detailed description of the following embodiments in conjunction with the accompanying drawings.

Hereinafter, exemplary embodiments of the present invention will be described in detail with reference to the accompanying drawings. It should be noted that like components will be denoted by like reference numerals throughout the specification and the accompanying drawings.

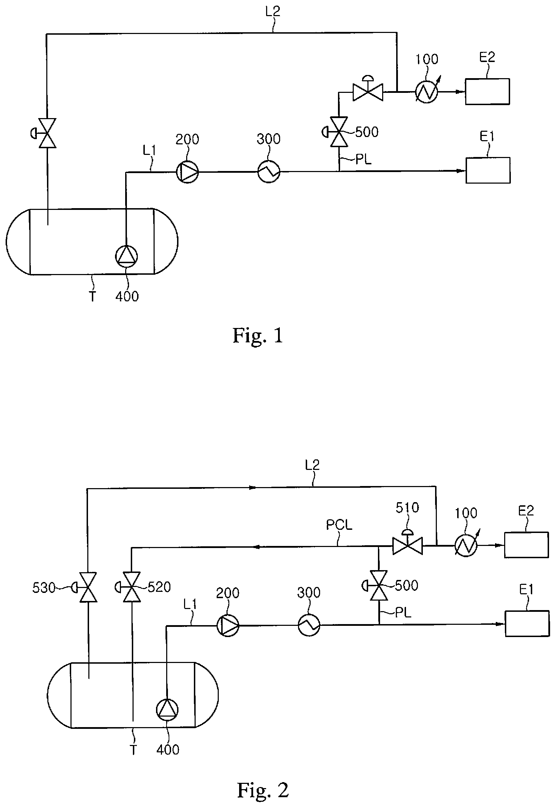

Fig. 1 is a diagram illustrating a basic concept of a system for supplying fuel from an LNG storage tank T to a plurality of engines according to one embodiment of the present invention, and Fig. 2 is a diagram illustrating an improvement of the system of Fig. 1, which is provided with a pressure containing channel PCL.

Referring to Fig. 1, a system according to one embodiment of the present invention is used in a ship provided with a plurality of engines fueled by natural gas and includes: a first channel L1 connected to an LNG storage tank T of the ship to pump LNG from the LNG storage tank, re-gasify the LNG, and supply the LNG to a first engine E1 of the ship; and a second channel L2 for supplying boil-off gas (BOG) generated in the LNG storage tank T to a second engine E2, such that each of the engines can be fueled.

The first engine E1 is an engine that is fueled by a fuel gas having a higher pressure than a fuel gas for the second engine E2, and a decompression channel PL branches off from the first channel L1 to decompress LNG pumped and re-gasified through a portion of the first channel L1 and supply the decompressed LNG to the second engine E2, such that, in addition to BOG, the decompressed LNG can also be supplied to the second engine E2.

In this embodiment, the LNG storage tank T is a pressure-resistant tank capable of holding BOG or flash gas generated therein. A design pressure of the pressure-resistant tank may be set to a gauge pressure of 2 bar or higher, preferably 3 bar to 30 bar, such that BOG can be supplied at a pressure required to operate the second engine without using a separate compressor.

In this embodiment, the pressure-resistant tank may be an independent storage tank, preferably an IMO C-type tank.

Referring to Fig. 2, a fuel supply system according to an improved embodiment of the present invention further includes a pressure containing channel PCL branching off from the decompression channel PL to supply LNG decompressed through the decompression channel PL to the LNG storage tank T.

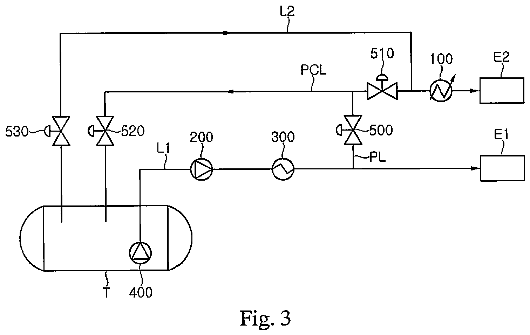

Since the decompressed LNG is supplied to a lower portion of the LNG storage tank T through the pressure containing channel PCL, pressure drop in the LNG storage tank T due to fuel supply can be prevented. Although the decompressed LNG is preferably supplied to the lower portion of the LNG storage tank T, as shown in Fig. 2, it should be understood that the decompressed LNG may be supplied to an upper or central portion of the LNG storage tank T, as in a modification of the system shown in FIG. 3.

The first channel L1 may be provided with a high pressure pump 200 pressurizing LNG from the LNG storage tank T to a high pressure and pumping the LNG and a vaporizer 300 re-gasifying the LNG pumped by the high pressure pump 200 and supplying the re-gasified LNG to the first engine E1, and the decompression channel PL branches off from the first channel L1 downstream of the high pressure pump 200.

In addition, the second channel L2 is provided with a heater 100 heating BOG to be supplied to the second engine E2 in accordance with fuel supply conditions required for the second engine E2. For a DF engine, the fuel gas to be supplied to the engine is heated to -30°C to 80°C, preferably 0°C to 60°C, by the heater 100.

In this embodiment, the first engine E1 may be a high-pressure gas injection engine that is fueled by a high-pressure gas compressed to a high pressure of 150 bar to 400 bar, and the second engine E2 may be a DF engine that is fueled by a low pressure gas at 5 bar to 20 bar.

The first engine E1 may be an engine for propulsion of the ship, for example, a MAN diesel electronically-gas injection (ME-GI) engine fueled by LNG, and the second engine E2 may be an engine for generating electricity for the ship, for example, a dual fuel diesel generator (DFDG) or a dual fuel diesel engine (DFDE).

An ME-GI engine is a 2-stroke high-pressure natural gas injection engine that was developed to reduce emissions of nitrogen oxide (NOₓ) and sulfur oxide (SOₓ) and can use gases and oils as fuel, and is fueled by a gas compressed to 150 bar to 400 bar.

Such an ME-GI engine can reduce pollutant emissions by 23% for carbon dioxide, 80% for nitrogen compounds, and 95% for sulfur compounds, as compared with a diesel engine of equivalent power output. A DF engine is an engine that is dual-fueled by heavy oil and natural gas. Although an operating pressure of the DF engine may vary depending on the licensor and size, the DF engine is generally supplied with natural gas having a pressure of about 5 bara to 20 bara, preferably 5 bara to 9 bara. In addition, the DF engine emits exhaust gas having relatively low sulfur oxide content due to low content of sulfur in fuel, as compared with an engine fueled by heavy oil alone. Thus, when an engine for propulsion or power generation using LNG as fuel is provided to the ship as in this embodiment, emission of air pollutants can be reduced.

Natural gas contains hydrocarbons such as ethane, propane, butane, and pentane, and inert gases such as nitrogen and carbon dioxide, in addition to methane. Here, the content of each of the above ingredients varies depending on area of production. As used herein, "methane number" refers to the content of methane in natural gas. When a fuel that does not meet the methane number requirement of an engine is supplied to the engine, abnormal combustion such as knocking or explosion or combustion of the fuel before a piston reaches the top dead point may occur. Such an abnormal combustion phenomenon may cause wear of an engine piston, deterioration in engine efficiency, and system failure.

In this embodiment, a fuel for the DF engine, which is the second engine, is required to have a methane number of 80 or higher, whereas a fuel for the ME-GI engine, which is the first engine, does not need to be controlled in methane number. Depending on the area of production, LNG may have a methane number of about 70. Thus, regulation of the methane number is required to forcibly re-gasify LNG and supply the re-gasified LNG to the DF engine. Conversely, BOG does not need to be controlled in methane number when supplied to the DF engine, since BOG is mostly composed of methane.

When, as in this embodiment, LNG is pumped and re-gasified through the first channel and supplied to the first engine, which is the ME-GI engine not requiring control of the methane number and BOG is supplied to the second engine, which is the DF engine, there is no need to regulate the methane number. Other ingredients in natural gas, such as ethane, propane, and butane, have a higher liquefaction temperature than methane and thus can be easily liquefied when the pumped and forcibly re-gasified LNG is decompressed to be supplied to the lower portion of the LNG storage tank through the pressure containing channel. Further, since the pressure of the LNG storage tank can be maintained at a constant level due to supply of the forcibly re-gasified LNG into the tank, the DF engine can continuously receive BOG.

A difference in methane number between fuels results in a difference in calorific value between the fuels. For instance, general LNG (C₁: 89.6%, N₂: 0.6%) having a methane number of 71.3 before separation has a lower heating value (LHV) of 48,872.8 kJ/kg (at 1 atm and in terms of saturated vapor), whereas LNG having a methane number of 95.5 has an LHV of 49,265.6 kJ/kg.

As described above, in this embodiment, the DF engine can continuously receive only BOG having a high methane number by maintaining the pressure of the LNG storage tank at a constant level, thereby allowing regulation of calorific value.

The LNG storage tank T is provided with a delivery pump 400 supplying LNG to the first channel L1. A decompression valve 500 is disposed in the decompression channel PL upstream of a point at which the pressure containing channel PCL branches off to decompress LNG pressurized to a high pressure by the high pressure pump 200 to a pressure suitable for supply to the second engine E2 or for return to the LNG storage tank T, for example, 5 bar to 20 bar.

A shut-off valve 510 capable of shutting off supply of the decompressed natural gas to the second engine E2 is disposed in the decompression channel PL downstream of the point at which the pressure containing channel PCL branches off, and a return valve 520 controlling supply of the decompressed natural gas to the LNG storage tank T is disposed in the pressure containing channel PCL.

A fuel supply valve 530 is disposed in the second channel L2 to control supply of BOG to the second engine E2.

As described above, in this embodiment, LNG is pumped from the LNG storage tank T and re-gasified to be supplied to the first engine E1, which is a high-pressure gas injection engine, and BOG generated in the LNG storage tank T is supplied to the second engine E2, which is a low-pressure gas injection engine, wherein a fraction of the pumped and re-gasified LNG to be supplied to the first engine E1 is decompressed and supplied to the second engine E2, and a fraction of the decompressed LNG is supplied to the LNG storage tank T to prevent pressure drop in the LNG storage tank T.

Thus, pressure drop in the LNG storage tank T due to fuel supply can be prevented, thereby allowing smooth and stable fuel supply. Further, since there is no need to provide a separate vaporizer, heater, or pipe for preventing pressure drop in the LNG storage tank T, it is possible to reduce the number of required components, thereby realizing a low-cost and space-efficient system.

Although some embodiments have been described herein, it should be understood that these embodiments are provided for illustration only and are not to be construed in any way as limiting the present invention, and that various modifications, changes, alterations, and equivalent embodiments can be made by those skilled in the art without departing from the spirit and scope of the invention.

## Claims

1. A fuel supply system for a ship engine, comprising:
a first channel connected to an LNG storage tank of a ship to pump LNG from the LNG storage tank, re-gasify the LNG, and supply the LNG to a first engine of the ship;
a decompression channel branching off from the first channel to decompress the pumped and re-gasified LNG and supply the LNG to a second engine of the ship; and
a pressure containing channel branching off from the decompression channel to supply the decompressed LNG to the LNG storage tank.

2. The fuel supply system according to claim 1, wherein the decompressed LNG is supplied through the pressure containing channel to a lower portion of the LNG storage tank to prevent a pressure drop in the LNG storage tank.

3. The fuel supply system according to claim 1, further comprising:
a second channel supplying boil-off gas (BOG) generated in the LNG storage tank to the second engine; and
a heater disposed in the second channel and heating the BOG to be supplied to the second engine.

4. The fuel supply system according to claim 1, further comprising:
a high pressure pump disposed in the first channel to pressurize the LNG to a high pressure; and
a vaporizer re-gasifying the LNG pressurized by the high pressure pump and supplying the LNG to the first engine,
wherein the decompression channel branches off from the first channel downstream of the high pressure pump.

5. The fuel supply system according to claim 4, wherein the first engine is a high-pressure gas injection engine fueled by a high-pressure gas compressed to a pressure of 150 bar to 400 bar, and the second engine is a DF engine fueled by a low-pressure gas at 5 bar to 20 bar.

6. The fuel supply system according to claim 4, further comprising:
a delivery pump disposed in the LNG storage tank to supply LNG to the first channel; and
a decompression valve disposed in the decompression channel upstream of a point at which the pressure containing channel branches off.

7. The fuel supply system according to claim 6, further comprising:
a shut-off valve disposed in the decompression channel downstream of the point at which the pressure containing channel branches off;
a return valve disposed in the pressure containing channel; and
a fuel supply valve disposed in the second channel.

8. The fuel supply system according to claim 1, wherein the LNG storage tank is a pressure-resistant tank and has a design pressure set to hold BOG or flash gas generated in the pressure-resistant tank during operation of the ship.

9. A fuel supply method for a ship engine, in which LNG is pumped from an LNG storage tank of a ship and re-gasified to be supplied to a first engine of the ship, and boil-off gas (BOG) generated in the LNG storage tank is supplied to a second engine of the ship,
wherein a fraction of the pumped and re-gasified LNG to be supplied to the first engine is decompressed and supplied to the second engine, and a fraction of the decompressed LNG is supplied to the LNG storage tank to prevent pressure drop in the LNG storage tank.

10. The fuel supply method according to claim 9, wherein the first engine is a high-pressure gas injection engine fueled by a high-pressure gas compressed to a high pressure of 150 bar to 400 bar, and the second engine is a DF engine fueled by a low-pressure gas at 5 bar to 20 bar.
